# DEMANDE DE BREVET EUROPEEN

(11) **EP 0 948 924 A1**
(43) Date de publication de la demande: **13.10.1999**
(21) Numéro de dépôt: 98400840.9
(22) Date de dépôt: 07.04.1998
(51) Int. Cl.: A47J 27/21

(54) **Bouilloire électrique de sécurité**

(71) Demandeur: SEB S.A., 69130 Ecully (FR)
(72) Inventeur: Rosset, Roger, 74150 Bloye (FR)
(74) Mandataire: Keib, Gérard

(57) **Abrégé**

La bouilloire électrique comporte des moyens de chauffage formant un fond chauffant (2) et des moyens de coupure du courant sous forme d'un thermostat de sécurité (4).

La bouilloire étant considérée reposer sur un plan horizontal, le fond chauffant (2) présente une partie surélevée (A) par rapport à une partie basse (B), et le thermostat (4) est placé au contact de ladite partie surélevée (A).

## Description

La présente invention concerne une bouilloire électrique comportant des moyens de chauffage et des moyens de coupure du courant sous forme d'un thermostat de sécurité.

Elle concerne notamment une bouilloire dans laquelle les moyens de chauffage comprennent une résistance à piste résistive sérigraphiée.

La technologie de sérigraphie de pistes résistives pour obtenir un élément chauffant présente de nombreux avantages, en particulier celui d'un faible coût de fabrication pour des articles de grande série. Mais, appliqué aux bouilloires, ce type de résistance exige que l'utilisateur se conforme à des consignes de sécurité relativement strictes.

La température des pistes ne doit en effet pas excéder un certain seuil, de l'ordre de 400°C, afin d'éviter leur détérioration. Quand il y a de l'eau, les pistes sont à une température d'environ 200°C. Mais le problème se pose quand il n'y a plus d'eau dans la bouilloire, ou quand le niveau d'eau est faible et que la bouilloire est mise sous tension alors qu'elle repose en position inclinée.

Dans le premier cas, le thermostat de sécurité va fermer le circuit d'alimentation électrique dès que l'élément chauffant aura atteint une température signal ou température de consigne. Compte tenu de l'élévation très rapide de la température, cette température signal n'est pas très éloignée du seuil critique de température au-delà duquel la piste risque d'être endommagée.

Le risque est du même ordre quand le niveau d'eau dans la bouilloire est faible et que cette dernière est en position inclinée. L'élément chauffant à résistance sérigraphiée, disposé traditionnellement suivant un plan horizontal, c'est-à-dire parallèlement au fond du corps de la bouilloire, se trouve de ce fait lui aussi incliné par rapport à l'horizontale. L'eau, en chauffant, s'évapore jusqu'à découvrir la partie de l'élément chauffant qui se trouve en position haute du fait de l'inclinaison de la bouilloire En raison de la puissance d'alimentation élevée, cette évaporation survient rapidement et la zone de la résistance sérigraphiée ainsi mise à nu s'échauffe sensiblement. Or, le thermostat de sécurité n'est pas nécessairement en contact avec cette zone de l'élément chauffant qui se trouve accidentellement découverte, du fait de l'inclinaison aléatoire de la bouilloire. Si le thermostat se trouve en contact avec une zone encore immergée de l'élément chauffant à résistance sérigraphiée, il fermera le circuit électrique lorsque cette zone contre laquelle il est appliqué aura atteint la température signal: à ce moment, la zone découverte de la partie haute pourra avoir atteint un seuil de température critique, dommageable pour la piste résistive qu'elle porte.

On connaît une bouilloire électrique, décrite dans le document DE 94 21 379, qui comporte un fond chauffant, supportant une résistance tubulaire électrique et un thermostat, ce fond chauffant étant parallèle au fond du corps de la bouilloire. Un socle accessoire est prévu pour placer la bouilloire de manière inclinée par rapport à un plan horizontal, les parois, le fond du corps et le fond chauffant de la bouilloire étant alors inclinés.

Cette disposition permet de placer la portion du fond chauffant supportant le thermostat de sécurité dans une position surélevée, de sorte que ce thermostat coupe l'alimentation électrique dès qu'une zone du fond chauffant n'est plus en contact avec l'eau contenue dans le réservoir de la bouilloire.

Cependant, cette réalisation requiert un socle auxiliaire, sur lequel il convient de poser la bouilloire dans une orientation précise pour obtenir la surélévation de la portion du fond chauffant portant le thermostat.

En outre, la disposition de la bouilloire sur ce socle est instable. Le risque de basculement de la bouilloire est accru lorsque le corps de celle-ci a une forme cylindrique allongée.

La présente invention se propose de résoudre le problème de la surchauffe d'un fond chauffant lorsqu'une partie de celui-ci n'est pas ou plus immergée sans les inconvénients précités.

L'invention vise ainsi une bouilloire électrique comportant un corps comprenant un fond adapté à reposer sur un plan horizontal, des moyens de chauffage formant un fond chauffant et des moyens de coupure du courant comprenant un thermostat de sécurité.

Suivant l'invention, cette bouilloire est caractérisée en ce que le fond chauffant est disposé dans un plan incliné par rapport au fond du corps de la bouilloire, et en ce que le thermostat est placé au contact d'une partie surélevée du fond chauffant lorsque la bouilloire repose sur un plan horizontal.

Le thermostat est ainsi fonctionnel dès qu'une zone du fond chauffant commence à se découvrir, et ce, quelle que soit la température des autres points du fond chauffant encore immergée partiellement dans l'eau de la bouilloire. D'autre part, comme on va l'expliquer, la zone découverte du fond chauffant correspond à la partie haute, définie structurellement, de celui-ci, pour la majorité des cas d'inclinaison fortuite de la bouilloire.

En outre, du fait de l'inclinaison du fond chauffant par rapport au fond de la bouilloire, ce fond chauffant est également incliné par rapport aux parois du corps de la bouilloire, la surface de chauffe, en contact avec l'eau contenue dans le réservoir, étant supérieure à celle obtenue dans les bouilloires classiques dans lesquelles le fond chauffant est situé dans un plan perpendiculaire aux parois du réservoir.

Enfin, l'inclinaison du fond chauffant par rapport au fond du corps de la bouilloire augmente l'espace disponible entre ce fond chauffant et le fond de la bouilloire et facilite la mise en place des différents éléments de sécurité et de connexion électrique nécessaires au fonctionnement de la bouilloire.

D'autres particularités et avantages de l'invention apparaîtront encore dans la description qui suit.

Aux dessins annexés, donnés à titre d'exemples non limitatifs:
- la figure 1 est une vue schématique en coupe verticale d'une bouilloire électrique selon l'invention, dans un mode de réalisation préféré;
- les figures 2 et 3 sont des vues analogues à la figure 1, mais la bouilloire étant inclinée et contenant très peu d'eau.

En référence aux figures annexées, la bouilloire comprend un corps creux 1, moulé en une matière plastique telle que du polypropylène, sur la paroi extérieure duquel est moulée une poignée de préhension 6. Le corps 1 présente, diamétralement opposé à la poignée, un évasement de la paroi qui forme un bec verseur 7.

A proximité du fond 8 du corps 1 de la bouilloire, s'étend une résistance réalisée, dans un mode de réalisation préféré de l'invention, sous forme de fond chauffant 2, constituant la limite inférieure pour le remplissage de la bouilloire, c'est-à-dire le fond du réservoir. Ledit fond chauffant 2, non représenté en détail aux figures, peut relever d'une technique connue d'application de résistances sérigraphiées aux bouilloires. Il consiste en une plaque de métal de section généralement circulaire. La face inférieure, opposée à l'eau, porte une piste résistive 2a, appliquée par exemple par sérigraphie. Cette piste résistive 2a est électriquement isolée de l'acier par un émail diélectrique. Les deux extrémités de la piste résistive constituent des bornes de sortie reliées à des éléments conducteurs permettant le branchement électrique de la bouilloire.

Conformément à l'invention, le fond chauffant 2 est disposé dans un plan incliné par rapport au fond 8 du corps 1 de la bouilloire et aux parois 9 de ce corps 1. A cet effet, sont prévus sur la face interne du corps creux 1 des moyens de support, tels qu'un rebord annulaire 5 venu de moulage avec la paroi interne 9 du corps creux 1 et réalisé dans un plan incliné de manière à présenter une partie haute A et une partie basse B. Le fond chauffant incliné 2 est constitué dès la mise en place de la plaque métallique à piste résistive, dont le bord périphérique s'appuie contre le rebord annulaire 5, après interposition d'un joint d'étanchéité annulaire 3.

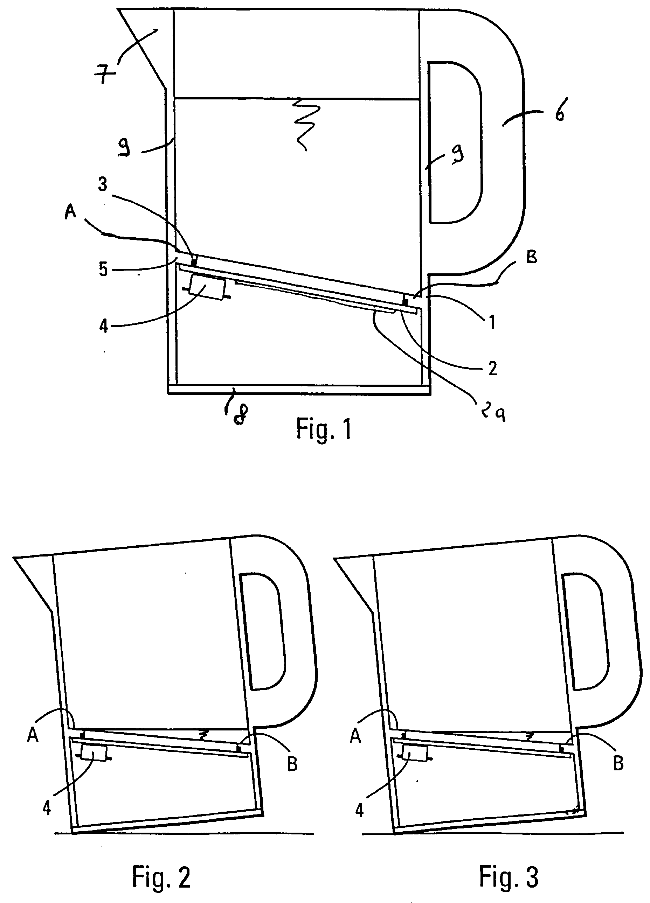

Avantageusement, la pente du fond chauffant 2 est comprise entre 5° et 10° par rapport au plan du fond du corps creux 1 de la bouilloire. En effet, la zone découverte du fond chauffant correspond en principe à la partie haute dudit fond chauffant, qui a été définie structurellement, et contre laquelle est appliqué le thermostat de sécurité. Cette condition est toujours remplie, sauf si l'inclinaison fortuite de la bouilloire, dirigée du côté de la partie haute structurelle du fond chauffant (comme représenté aux figures 2 et 3), était en outre égale ou supérieure à celle du plan incliné dudit fond chauffant. On estime donc qu'une pente de 10° pour ce dernier est suffisante pour prévenir ce risque.

De préférence, la partie surélevée A du fond chauffant 2 est située sensiblement au droit du bec verseur 7 de la bouilloire, et la partie la plus basse B est adjacente à la partie de paroi 9 supportant la poignée de préhension 6.

Conformément à l'invention, le thermostat de sécurité 4 est placé au contact de la partie surélevée du fond chauffant 2, autrement dit dans la zone de la partie surélevée A du rebord annulaire 5. L'avantage d'une telle disposition se révèle immédiatement après mise sous tension de la bouilloire, le niveau de l'eau contenue étant faible, comme ce peut être le cas lorsque l'utilisateur omet de le vérifier. Deux hypothèses se présentent:

La bouilloire étant en position horizontale, la partie basse B du fond chauffant 2 est en contact avec le fond d'eau, mais non la partie haute A, qui se trouve découverte. Après la mise sous tension de la bouilloire, la zone découverte A va s'échauffer rapidement, mais le thermostat 4, directement en contact avec elle, prend la mesure de cette température et coupe quasi-instantanément le circuit, bien avant que la température critique menaçant l'intégrité des moyens de chauffage, et notamment de la piste résistive ne soit atteinte pour l'ensemble du fond chauffant 2.

En référence aux figures 2 et 3, la bouilloire se trouve inclinée par rapport à l'horizontale et ne contient qu'une très faible quantité d'eau. Comme on l'a vu en introduction, il s'agit des conditions critiques qui conduisent à la détérioration de la piste résistive lorsque la résistance sérigraphiée de la bouilloire mise sous tension est disposée traditionnellement, c'est-à-dire dans un plan horizontal. En revanche, les dispositions prévues par l'invention vont permettre d'éviter la surchauffe de l'ensemble de la résistance sérigraphiée, préservant ainsi l'intégrité de la piste résistive.

La quantité d'eau, très faible, serait normalement insuffisante pour couvrir la partie haute A du fond chauffant 2 si la bouilloire reposait sur un plan horizontal, et le thermostat devrait, comme on l'a vu, couper le circuit pratiquement dès la mise sous tension de la bouilloire. Toutefois, cette dernière se trouve en position légèrement inclinée, comme cela est susceptible de se produire si le plan d'appui est lui-même incliné ou si la bouilloire a été malencontreusement posée sur un objet. Du fait de l'inclinaison de la bouilloire et de la présence d'un fond d'eau sur toute la surface du fond chauffant 2, y compris dans sa partie haute A, la puissance de chauffe va élever rapidement la température de l'élément chauffant et celle de l'eau, qui va s'évaporer et découvrir la partie haute A comme on le voit à la figure 3. Le thermostat 4, qui prend la mesure de cette température locale, coupe le circuit alors même que la résistance sérigraphiée est encore partiellement immergée en partie basse B, c'est-à-dire avant que la température moyenne de la résistance n'ait atteint le seuil critique.

La disposition d'un fond chauffant, et plus précisément d'une piste résistive présentant une partie surélevée par rapport à une partie basse, associée à un thermostat en contact avec ladite partie surélevée, crée ainsi les conditions d'une mise hors tension suffisamment précoce de la bouilloire, lorsque le niveau d'eau est faible, pour éviter la surchauffe de la résistance sérigraphiée dans son ensemble et par là sa détérioration.

Cette mise hors tension s'effectue également dans le cas où la bouilloire mise sous tension accidentellement, alors qu'elle ne contient qu'une très faible quantité d'eau, est en position inclinée. La raison en est que la zone découverte du fond chauffant correspond à une partie haute de l'élément chauffant à piste résistive, définie structurellement et non plus aléatoirement en fonction de l'inclinaison de la bouilloire.

La solution du problème à la base de l'invention se traduit ainsi par une meilleure sécurité en même temps qu'une grande simplicité et économie de moyens.

Bien entendu, l'invention n'est pas limitée aux exemples de réalisation que l'on vient de décrire, et on peut apporter à ceux-ci de nombreuses modifications sans sortir de son cadre.

Ainsi, la résistance sérigraphiée pourrait être remplacée par un élément tubulaire.

La disposition d'un fond chauffant selon un plan incliné, comme décrit en référence aux figures annexées, présente toutefois l'avantage de la simplicité de fabrication. En outre, la zone susceptible de s'échauffer du fait qu'elle n'est plus immergée, augmente progressivement jusqu'à ce que la température atteinte soit perçue comme un signal par le thermostat: celui-ci coupe donc le circuit dès que la température est atteinte sur une zone très peu étendue. L'étroitesse de la zone échauffée joue évidemment en faveur de la préservation de l'intégrité de la piste résistive.

## Revendications

1. Bouilloire électrique comportant un corps (1) comprenant un fond (8) adapté à reposer sur un plan horizontal, des moyens de chauffage formant un fond chauffant (2) et des moyens de coupure du courant (4) comprenant un thermostat de sécurité, caractérisée en ce que le fond chauffant (2) est disposé dans un plan incliné par rapport au fond (8) du corps (1) de la bouilloire et en ce que le thermostat (4) est placé au contact d'une partie surélevée (A) du fond chauffant (2) lorsque la bouilloire repose sur un plan horizontal.

2. Bouilloire électrique conforme à la revendication 1, caractérisée en ce que les moyens de chauffage comprennent une résistance à piste résistive sérigraphiée (2a).

3. Bouilloire conforme l'une des revendications 1 ou 2, caractérisée en ce que ledit fond chauffant (2) est disposé selon un plan incliné, de pente comprise entre 5° et 10° par rapport au fond (8) du corps (1) de la bouilloire.

4. Bouilloire conforme à l'une des revendications 1 à 3, caractérisée en ce que la paroi interne (9) du corps (1) comprend des moyens de support (5) réalisés dans un plan incliné par rapport au fond du corps (1).

5. Bouilloire conforme à la revendication 4, caractérisée en ce que les moyens de support comprennent un rebord annulaire (5) moulé avec la paroi interne (9) du corps (1).

6. Bouilloire conforme à l'une des revendications 1 à 5, caractérisée en ce que la partie surélevée (A) du fond chauffant (2) est située sensiblement au droit d'un bec verseur (7) de la bouilloire.
